# EUROPÄISCHE PATENTSCHRIFT

(11) **EP 4 181 820 B1**
(45) Veröffentlichungstag und Bekanntmachung des Hinweises auf die Patenterteilung: **12.02.2025**
(21) Anmeldenummer: 21740044.9
(22) Anmeldetag: 07.07.2021
(51) Int. Cl.: A61C 13/00, A61C 13/09, A61C 13/08

(54) **VERFAHREN ZUR DEFINITION UNTERSCHIEDLICHER SCHICHTELEMENTE EINES KÜNSTLICHEN ZAHNELEMENTS**
METHOD FOR DEFINING DIFFERENT LAYER ELEMENTS OF AN ARTIFICIAL TOOTH ELEMENT
PROCESSUS DE DÉFINITION DES DIFFÉRENTS ÉLÉMENTS DE COUCHE D'UN ÉLÉMENT DENTAIRE ARTIFICIEL

(30) Priorität: 20.07.2020 EP 20186640
(43) Veröffentlichungstag der Anmeldung: 24.05.2023
(73) Patentinhaber: VITA-ZAHNFABRIK H. Rauter GmbH & Co. KG, 79713 Bad Säckingen (DE)
(72) Erfinder: KIRSTEN, Armin, 79713 Bad Säckingen (DE)
(74) Vertreter: dompatent von Kreisler Selting Werner - Partnerschaft von Patent- und Rechtsanwälten mbB
(86) Internationale Anmeldenummer: PCT/EP2021/068795
(87) Internationale Veröffentlichungsnummer: WO 2022/017788

(56) Entgegenhaltungen:
- EP-A1- 1 252 867
- EP-B1- 2 363 094
- US-A1- 2010 105 011
- US-A1- 2018 116 772

## Beschreibung

Die Erfindung betrifft ein Verfahren zur Definition unterschiedlicher Schichtelemente eines künstlichen Zahnelements.

Bei der Herstellung künstlicher Zahnelemente besteht ein wesentliches Ziel darin, dass das künstliche Zahnelement den natürlichen Zähnen des Patienten im Erscheinungsbild möglichst ähnlich ist. Beim natürlichen Zahn ist das Dentin im sichtbaren Bereich vom Zahnschmelz umgeben. Insbesondere ist es schwierig, das Erscheinungsbild von alten Zähnen nachzuahmen, da diese häufig zusätzliche Effekte aufweisen.

Zur Herstellung von Zahnelementen, bei denen es sich um einen vollständigen künstlichen Zahn, eine Krone o.dgl. handeln kann, ist es bekannt, das Zahnelement ebenfalls aus mindestens zwei unterschiedlichen Materialien herzustellen und die Grenze zwischen Dentin und Zahnschmelz nachzubilden. Hierzu ist es aus DE 10 2010 002 484 A1 bekannt, mittels eines Röntgenverfahrens am natürlichen Zahn des Patienten die Grenze zwischen Dentin und Schmelz zu bestimmen und sodann ein Zahnelement herzustellen, bei dem ein inneres, das Dentin nachbildende Material, dieselbe geometrische Form wie das natürliche Dentin des Patienten aufweist und insbesondere die Schichtdicke des den Zahnschmelz ersetzenden Materials entsprechend der Dicke des natürlichen Zahnschmelzes auszubilden. Da die Materialien, die den Zahnschmelz und das Dentin beim künstlichen Zahnelement ersetzen, nicht die gleichen optischen Eigenschaften aufweisen wie die natürlichen Materialien, unterscheiden sich derart hergestellte künstliche Zahnelemente im optischen Erscheinungsbild weiterhin von dem Erscheinungsbild der übrigen Zähne des Patienten. Weiterer Stand der Technik ist durch US 2018/116772, US 2010/105011, EP 1 252 867 und EP 2 363 094 angegeben.

Aufgabe der Erfindung ist es, ein Verfahren zur Definition unterschiedlicher Schichtelemente eines künstlichen Zahnelements zu schaffen, um ein künstliches Zahnelement zu schaffen, dessen optische Eigenschaften den optischen Eigenschaften des natürlichen Zahns des Patienten entsprechen bzw. möglichst nahekommen.

Die Lösung der Aufgabe erfolgt erfindungsgemäß durch ein Verfahren gemäß Anspruch 1.

Gemäß dem erfindungsgemäßen Verfahren erfolgt zunächst ein Definieren einer Grenzfläche zwischen einem inneren Kernelement und mindestens einem das innere Kernelement zumindest teilweise umgebenden äußeren Schichtelement. Das innere Kernelement entspricht hierbei verglichen mit dem natürlichen Zahn dem Bereich, in dem der Zahn Dentin aufweist. Das äußere Schichtelement entspricht verglichen mit dem natürlichen Zahn insbesondere den Bereich, der Schmelz aufweist.

Die Definition der Grenzfläche kann derart erfolgen, dass eine Abbildung der tatsächlichen Grenzfläche zwischen Schmelz und Dentin des nachzubildenden natürlichen Zahns erfolgt.

Vorzugsweise erfolgt die Definition mindestens einer Grenzfläche im Inneren eines künstlichen Zahnelements, wobei dies nicht unbedingt der natürlichen Grenzfläche entsprechen muss. Die mindestens eine Grenzfläche stellt eine Grenzfläche zwischen mindestens zwei unterschiedlichen Materialien, aus denen das künstliche Zahnelement hergestellt wird, dar. Diese Grenzfläche entspricht nicht oder zumindest nicht vollständig der Grenzfläche zwischen Dentin und Zahnschmelz des natürlichen Zahns des Patienten bzw. wird nicht unter Berücksichtigung der tatsächlichen Grenze definiert. Durch Definition zumindest einer anderen, d.h. sich von der natürlichen Grenzfläche zumindest teilweise unterscheidenden Grenzfläche, werden die optischen Eigenschaften der verwendeten Materialien derart genutzt, dass das optische Erscheinungsbild eines derart hergestellten künstlichen Zahnelements dem optischen Erscheinungsbild des natürlichen Zahns möglichst nahe kommt und vorzugsweise im Wesentlichen entspricht.

Zunächst erfolgt erfindungsgemäß ein Bestimmen der dreidimensionalen Außenkontur des Zahnelements. Die Außenkontur des künstlichen Zahnelements entspricht hierbei der Außenkontur des zu ersetzenden natürlichen Zahns. Dies kann beispielsweise durch Auswahl einer geeigneten Außenkontur aus einer Zahnbibliothek erfolgen, die auf die individuelle Anatomie angepasst wird, um den funktionellen und ästhetischen Anforderungen der herzustellenden Restauration zu genügen. Alternativ zur Auswahl der Form aus einer Zahnbibliothek kann beispielsweise bei einer Einzelkrone auch die Zahnkontur des gegenüberliegenden Zahns gespiegelt werden. In einem insbesondere dem erfindungsgemäßen Verfahren vorgelagerten Schritt, kann eine dreidimensionale Außenkontur eines Zahnelements bestimmt und insbesondere erfasst werden. Auch ist es möglich, einen Datensatz zu öffnen, der die dreidimensionale Außenkontur des Zahnelements umfasst.

Ferner kann zur Vorbereitung des erfindungsgemäßen Verfahrens ein Ausrichten einer dreidimensionalen Außenkontur des Zahnelements an einem Koordinatensystem erfolgen. Das Koordinatensystem steht vorzugsweise in Bezug zu anatomisch definierten Richtungsbezeichnungen, so dass das Koordinatensystem insbesondere die Richtungen mesial, distal, apikal und inzisal/okklusal aufweist. Eine Ausrichtung eines Zahnelements an einem Koordinatensystem weist den Vorteil auf, dass es auf einfache Weise möglich ist, ausgehend von der dreidimensionalen Außenkontur des Zahnelements, mindestens eine im Inneren des Zahnelements liegende Grenzfläche zu definieren.

Das Definieren einer ersten Grenzkurve erfolgt auf der Zahnoberfläche. Eine erste Grenzkurve kann auf Basis des Zahnäquators definiert werden. Der Zahnäquator ist der größte Umfang eines Zahns im Bereich der Zahnkrone. Ebenso kann die erste Grenzkurve auch auf einer Präparationsgrenze als Kurve basieren, wobei die Präparationsgrenze die Grenze zwischen dem künstlich bearbeiteten Zahnelement und der unbearbeiteten Zahnoberfläche darstellt. Auch ist es möglich, die erste Grenzkurve zumindest teilweise manuell zu definieren. Auch ist ein manuelles Anpassen einer beispielsweise auf Basis des Zahnäquators und/oder der Präparationsgrenze insbesondere automatisch definierten Kurve möglich. Bevorzugt ist es, dass die erste Grenzkurve zwischen dem Zahnäquator und der Präparationsgrenze definiert wird. Hierbei ist es beispielsweise möglich, die erste Grenzkurve in einem festen Abstand zum Zahnäquator und/oder zur Präparationsgrenze zu definieren. Insbesondere kann die erste Grenzkurve den gleichen Abstand zum Zahnäquator und zur Präparationsgrenze aufweisen, d.h. exakt zwischen dem Zahnäquator und der Präparationsgrenze vorgesehen sein.

Bezogen auf die erste Grenzkurve erfolgt ein Bestimmen einer inzisal bzw. okklusal gelegenen Zahnoberfläche. Diese Zahnoberfläche wird erfindungsgemäß nach innen verschoben. Die Verschiebung erfolgt in Richtung der Flächennormalen, wobei die Verschiebung insbesondere um unterschiedliche Beträge erfolgt. Es existieren somit Flächenbereiche der Zahnoberfläche, die stärker oder weniger stark nach innen verschoben werden. Diese unterschiedlichen Beträge der Verschiebung basieren auf variablen Designparametern. Durch ein derartiges Verschieben der Zahnoberfläche wird die mindestens eine Grenzfläche erzeugt.

Die Designparameter können insbesondere bei unterschiedlichen Zähnen des Patienten variieren. Unterschiedliche Designparameter können beispielsweise auch erforderlich sein, wenn die Restauration auf unterschiedlich gefärbten Zahnstümpfen erfolgt oder die Restaurationen unterschiedlich dick gestaltet sind, da das optische Erscheinungsbild der Zahnstümpfe auf Grund der Transluzenz der verwendeten Materialien des künstlichen Zahnelements Einfluss auf das Erscheinungsbild des künstlichen Zahnelements hat. Die Designparameter sind insbesondere auch abhängig vom verwendeten Material. Beispielsweise kann eine Mindestwandstärke eines Materials vorgegeben sein. Dies ist insbesondere bei dem die Stabilität im Wesentlichen bestimmenden inneren, insbesondere dentinfarbenen Material der Fall. Außerdem unterscheiden sich die optischen Eigenschaften von polymerbasiertem Material von denen rein keramischer Materialien.

Bei einer bevorzugten Weiterbildung des Verfahrens beschreiben die variablen Designparameter eine maximale erste Verschiebung der Zahnoberfläche und/oder eine erste Länge zur Definition einer Übergangsfläche.

Vorzugsweise ist hierbei die erste Verschiebung derart gewählt, dass bei Front- und Seitenzähnen unmittelbar an der ersten Grenzkurve noch keine Verschiebung erfolgt. Bei Seitenzähnen erfolgt zusätzlich bei der Mittelfissur keine Verschiebung. Der Betrag der ersten Verschiebung nimmt sodann in Richtung der Flächennormalen nach inzisal bzw. okklusal ausgehend von der ersten Grenzkurve vorzugsweise stetig zu, bis der Betrag der Verschiebung die maximale erste Verschiebung erreicht.

Die Definition der Übergangsfläche kann beispielsweise durch Festlegen des Designparameters der ersten Länge erfolgen. Vorzugsweise definiert somit die erste Länge ausgehend von der ersten Grenzkurve einen Übergangsbereich. Diese ist ausgehend von Null bis zu der vollen ersten Verschiebung definiert. Ein Übergangsbereich ist vorgesehen, um einen insbesondere fließenden Übergang ausgehend von der ersten Grenzkurve zur vollständigen ersten Verschiebung zu realisieren. Durch das Definieren einer derartigen Übergangsfläche ist es möglich, das natürliche Erscheinungsbild eines Zahnes nachzubilden, bei dem der Zahnschmelz in apikaler Richtung immer dünner wird.

Die Definition einer Übergangsfläche kann auch derart erfolgen, dass die erste Grenzkurve um die erste Länge nach inzisal bzw. okklusal projiziert wird, wobei durch diese Projektion eine zweite Grenzkurve definiert wird. Die Übergangsfläche ist sodann zwischen der ersten und der zweiten Grenzkurve definiert.

Es ist somit besonders bevorzugt, dass die Definition der mindestens einen Grenzfläche im Inneren des künstlichen Zahns mindestens die folgenden Schritte aufweist:
Definition einer ersten Grenzkurve auf der Zahnoberfläche,
Bestimmen einer bezogen auf die ersten Grenzkurve inzisal/okklusal gelegenen Zahnoberfläche und
Verschieben dieser Zahnoberfläche nach innen in Richtung der Flächennormalen, um unterschiedliche Beträge zur Erzeugung der mindestens einen Grenzfläche, insbesondere der ersten Grenzfläche.

Vorzugsweise beschreiben die variablen Designparameter eine maximale erste Verschiebung der Zahnoberfläche und eine erste Länge zur Definition einer Übergangsfläche, wobei bei Front- und Seitenzähnen unmittelbar an der ersten Grenzkurve und bei Seitenzähnen zusätzlich bei der Mittelfissur bei einer ersten Verschiebung noch keine Verschiebung erfolgt und wobei der Betrag der ersten Verschiebung in Richtung der Flächennormalen nach inzisal/ okklusal ausgehend von der ersten Grenzkurve stetig zunimmt, bis die maximale erste Verschiebung erreicht ist, wobei die erste Länge als Designparameter festgelegt wird.

Ferner kann die erste Grenzkurve um die erste Länge nach inzisal/okklusal zur Definition einer zweiten Grenzkurve projiziert werden, wobei die Übergangsfläche zwischen der ersten und der zweiten Grenzkurve definiert ist.

Nach einer Definition einer Grenzfläche zwischen dem inneren Kernelement und mindestens einem das innere Kernelement zumindest teilweise umgebenden äußeren Schichtelement erfolgt erfindungsgemäß ein Auswählen mindestens eines Zusatz-Schichtelements. Erfindungsgemäß erfolgt die Auswahl eines Zusatz-Schichtelements aus einer bereitgestellten, mehrere Zusatz-Schichtelemente enthaltenden Auswahlliste. Insbesondere kann es sich hierbei um eine auf einem Bildschirm dargestellte Auswahlliste oder Auswahlbox handeln, so dass ein Zahnarzt oder Zahntechniker auf einfache Weise einzelne oder mehrere in der Auswahlliste enthaltene Zusatz-Schichtelemente beispielsweise durch einfaches Anklicke oder Markieren auswählen kann. Der Zahnarzt bzw. Zahntechniker muss somit die entsprechenden Zusatz-Schichtelemente nicht modellieren oder dergleichen, sondern muss diese lediglich auswählen. Das mindestens eine ausgewählte Zusatz-Schichtelement wird sodann gemäß dem erfindungsgemäßen Verfahren automatisch in einem räumlich definierten Bezug zu dem Kernelement und/oder dem äußeren Schichtelement angeordnet. Ggf. kann die automatische Anordnung unmittelbar auf einem Bildschirm dargestellt werden, so dass der Zahnarzt bzw. Zahntechniker bereits einen ersten Eindruck hat, ob durch die Auswahl eines oder mehrerer Zusatz-Schichtelemente das optische Erscheinungsbild des einzusetzenden künstlichen Zahnelements dem natürlichen Zahn nahekommt.

Die automatische Anordnung des mindestens einen ausgewählten Zusatz-Schichtelements erfolgt in einem räumlich definierten Bezug zu dem Kernelement und/oder dem äußeren Schichtelement. Vorzugsweise basiert die automatische Anordnung auf anatomischen Merkmalen und/oder aufgrund von Hilfslinien oder Hilfspunkten. Die Hilfslinien und/oder Hilfspunkte werden vorzugsweise aufgrund von anatomischen Merkmalen auf den Oberflächen angelegt bzw. definiert. Insbesondere sind die anatomischen Merkmale und Definitionen der Hilfslinien und/oder der Hilfspunkte bei jedem Schichtelement unterschiedlich. Vorzugsweise erfolgt dies wie nachstehend in Bezug auf die jeweiligen Schichtelemente beschrieben.

Die Auswahlliste kann insbesondere umfassen:
Akzentuierung Mamelons und/oder chromatischer Zahnhals und/oder Transluzenz-Effekt und/oder Halo-Effekt und/oder Horizontalband und/oder Flächeneffekt.

Bei den Zusatz-Schichtelementen "Transluzenz-Effekt" und "Halo-Effekt" handelt es sich insbesondere um Untergruppen eines Zusatz-Schichtelements "inzisaler/okklusaler optischer Effekt".

Zur weiteren Verbesserung des optischen Erscheinungsbildes des künstlichen Zahnelements ist es vorzugsweise möglich, zumindest für einzelne Zusatz-Schichtelemente ein Material und/oder eine Farbe auszuwählen. Auch kann ein Zusatz-Schichtelement aus unterschiedlichen Materialien hergestellt sein, unterschiedliche Farben oder einen Farbverlauf aufweisen. Sofern ein Zusatz-Schichtelement in dem künstlichen Zahnelement nicht nur einmal, sondern mehrfach vorgesehen wird, ist es vorzugsweise möglich, für dieses unterschiedliche Materialien, Farben und dergleichen auszuwählen, so dass für jedes Zusatz-Schichtelement gesondert eine entsprechende Material- und/oder Farbauswahl erfolgen kann.

Bei der Auswahl des Zusatz-Schichtelements "Akzentuierung Mamelons" ist es bevorzugt, dass dieses am Kernelement im Bereich des Mamelons angeordnet wird. Das mindestens eine Mamelon ist vorzugsweise von der Grenzfläche definiert. Es ist möglich, mehrere Zusatz-Schichtelemente derart auszubilden, dass an unterschiedlichen Mamelons unterschiedliche Zusatz-Schichtelemente "Akzentuierung Mamelons" angeordnet werden. Bevorzugt ist es insbesondere, dass das Zusatz-Schichtelement "Akzentuierung Mamelons" zumindest teilweise innerhalb des äußeren Schichtelements angeordnet ist. Insbesondere erfolgt zur Ausbildung des Zusatz-Schichtelements "Akzentuierung Mamelons" ein Verschieben der Grenzfläche an zumindest einem Mamelon. Das Verschieben der Grenzfläche erfolgt insbesondere in inzisale Richtung.

Bevorzugt ist es, dass das Zusatz-Schichtelement "Akzentuierung Mamelons" auf dem durch die Grenzfläche definierten Mamelon angeordnet wird. Insbesondere wird das Zusatz-Schichtelement "Akzentuierung Mamelons" auf den Mamelon ähnlich einer Haube oder eines Hütchens aufgesetzt.

In einer bevorzugten Weiterbildung des erfindungsgemäßen Verfahrens werden Kontrollpunkte zumindest eines Mamelons definiert. Vorzugsweise handelt es sich bei den Kontrollpunkten um Höhepunkte. Ein Höhepunkt definiert die Spitze bzw. den oberen Bereich des Mamelons. Vorzugsweise werden Kontrollpunkte, bei denen es sich insbesondere um Höhepunkte handelt, inzisal verschoben. Vorzugsweise werden Tiefpunkte, d.h. die tiefsten Punkte zwischen benachbarten Mamelons, nicht verschoben. Ein Polygon, das die Außenkontur der Mame-Ions definiert, hat somit Maxima, die den Höhepunkten der Mamelons entsprechen, und Minima, die den Tiefpunkten in den Tälern zwischen den Mamelons entsprechen. In bevorzugter Ausführungsform werden somit die Maxima des Polygons inzisal verschoben, wobei die Minima nicht verschoben werden.

Besonders bevorzugt ist es, dass das Zusatz-Schichtelement "Akzentuierung Mamelons" in dem Bereich zwischen den Grenzflächen vor und nach dem Verschieben der Grenzflächen ausgebildet wird. Die Verschiebung liegt vorzugsweise im Bereich von 0 bis 1 mm und insbesondere im Bereich von 0 bis 0,7 mm.

Zur Definition eines derartigen Polygons kann zunächst eine dritte bzw. weitere Grenzkurve definiert bzw. erstellt werden. Dies erfolgt durch eine Projektion der ersten oder zweiten Grenzkurve um eine zweite Länge, wobei das Vorsehen einer zweiten Grenzkurve optional ist. Insbesondere wird die dritte bzw. weitere Grenzkurve durch inzisale bzw. okklusale Projektion der ersten Grenzkurve oder durch apikale Projektion der zweiten Grenzkurve erstellt. Alternativ kann die dritte Grenzkurve unabhängig von der ersten oder zweiten Grenzkurve manuell oder basierend auf anderen Merkmalen des Zahnelements, zum Beispiel dem Äquator oder der Präparationsgrenze, erstellt werden.

Ferner wird vorzugsweise eine inzisale bzw. okklusale erste Flächenkontur bestimmt. Die erste Flächenkontur wird durch die höchste Kurve auf der durch die erste maximale Verschiebung erstellten ersten Grenzfläche definiert. Die höchste Kurve kann automatisch ermittelt und ggf. manuell korrigiert werden. Auf der ersten Flächenkontur werden Knotenpunkte erstellt bzw. festgelegt. Anschließend erfolgt zumindest teilweise ein Verschieben der Knotenpunkte in apikale oder inzisale/okklusale Richtung. Die zumindest teilweise verschobenen Knotenpunkte werden mit einer zweiten Flächenkontur miteinander verbunden. Die derart erzeugte zweite Flächenkontur definiert die maximale zweite Verschiebung der Zahnoberfläche (bzw. der ersten Grenzfläche) im Bereich der inzisalen bzw. okklusalen Flächenkontur. Vorzugsweise werden zwei unterschiedliche Mamelonkurven erzeugt, die entsprechend der nachstehend beschriebenen Verfahrensschritte die zweite Verschiebung erzeugen. Zwei verschiedene Mamelonkurven erzeugen hierbei zwei verschiedene Geometrien. Durch "Subtraktion" der kleineren Geometrie von der größeren ergeben sich Zwischenräume, in denen die Zusatz-Schichtelemente "Akzentuierung Mamelons" angeordnet werden.

Der Betrag der zweiten Verschiebung nimmt in dieser bevorzugten Ausführungsform des erfindungsgemäßen Verfahrens in Richtung der Flächennormalen bei Front- und Seitenzähnen in apikaler Richtung um eine dritte Länge stetig ab, bis maximal die dritte Grenzkurve bzw. eine zu diesem Zweck als maximal definierte Länge erreicht ist. Bei Seitenzähnen nimmt der Betrag der zweiten Verschiebung ebenfalls in Richtung der Mittelfissur stetig ab bis die Mittelfissur erreicht ist. Vorzugsweise ist der Betrag der zweiten Verschiebung unmittelbar an der dritten Grenzkurve bzw. unmittelbar an der Mittelfissur "0". Die Mittelfissur kann auch manuell definiert werden und/oder es kann eine manuelle Korrektur einer automatisch definierten bzw. vorgegebenen Mittelfissur erfolgen.

Vorzugsweise liegt die maximale erste Verschiebung der Zahnoberfläche im Bereich von 0 mm bis 4 mm.

Des Weiteren ist es bevorzugt, dass die erste Länge, die zur Erzeugung der Übergangsfläche erforderlich ist, eine Erstreckung von 0,1 mm bis 10 mm aufweist.

Eine Grenze, d.h. der Anfang und das Ende der automatisch ermittelten höchsten Kurve auf der ersten und/oder zweiten inzisalen Flächenkontur, wird bei einer bevorzugten Weiterbildung der Erfindung bei Frontzähnen durch einen Winkel definiert. Bei dem Winkel handelt es sich um einen Winkel zwischen den Tangenten auf der inzisalen Flächenkontur und der Zahnachse, wobei der Winkel 0° bis 90°, vorzugsweise 10° bis 70° und besonders bevorzugt 40° bis 50° beträgt. Die Zahnachse ist bei Zähnen als Verbindungslinie zwischen der Wurzelspitze bei einwurzligen Zähnen und der Mitte der Schneidekante bzw. Kaufläche und bei mehrwurzligen Zähnen zwischen der Wurzelgabelung und der Kauflächenmitte definiert. Insbesondere ist es auch möglich, die Grenzen, d.h. den Anfang und das Ende, sowie auch ggf. den Verlauf der inzisalen Flächenkontur manuell zu definieren oder anzupassen.

Vorzugsweise wird die Position der Knotenpunkte auf der inzisalen Flächenkontur von Frontzähnen relativ zur Gesamtlänge der inzisalen Flächenkontur angegeben bzw. definiert. Bevorzugt ist es hierbei, dass mindestens fünf Punkte auf der inzisalen Flächenkontur definiert werden. Bevorzugt ist es, eine höhere Anzahl von Punkten, insbesondere mehr als 10 und besonders bevorzugt mehr als 20 Punkte zu definieren.

Bei Seitenzähnen ist es bevorzugt, dass die Position der Knotenpunkte auf der inzisalen/okklusalen Flächenkontur pro Höcker relativ zu den Längen der Höckergrade angegeben werden. Insbesondere wird hierbei die Länge der Höckergrade zwischen dem mesialen Höckeranfang und der Höckerspitze bzw. der Höckerspitze und dem distalen Höckerende verwendet. Bevorzugt ist es wiederum, dass auf der Gesamtlänge der okklusalen Flächenkontur pro Höcker mindestens fünf Punkte definiert werden. Bevorzugt ist eine höhere Zahl an Punkten von mindestens 10, insbesondere mindestens 20 Punkten.

Die Verschiebung der Knotenpunkte auf der inzisalen/okklusalen Flächenkontur in apikale Richtung liegt vorzugsweise im Bereich von -4,0 mm bis +4,0 mm.

Zusätzlich oder anstelle des Vorsehens eines oder mehrerer Zusatz-Schichtelemente "Akzentuierung Mamelons" kann das Zusatz-Schichtelement "chromatischer Zahnhals" ausgewählt werden. Häufig ist es zur Angleichung des optischen Erscheinungsbildes des künstlichen Zahnelements an den natürlichen Zahn zweckmäßig und erforderlich, die Zahnfarbe im Bereich des Zahnhalses anzupassen, insbesondere zu intensivieren. Besonders bevorzugt ist hierbei die Verwendung von Material mit einem Farbton, der intensiver ist als der Farbton des Dentins. Insbesondere handelt es sich um eine gelbliche und/oder bräunliche Einfärbung des Zahntons.

Bei Auswahl des Zusatz-Schichtelements "chromatischer Zahnhals" erfolgt in einem apikal zu einer Grenzkurve gelegenen Bereich des äußeren Schichtelements ein zumindest teilweises Einfärben dieses Materials.

Zur Ausbildung des Zusatz-Schichtelements "chromatischer Zahnhals" kann das Material des äußeren Schichtelements eingefärbt werden. Zusätzlich oder alternativ kann zur Ausgestaltung des Zusatz-Schichtelements "chromatischer Zahnhals" ein zusätzliches Element aus einem anderen Material vorgesehen werden. Dieses ist sodann vorzugsweise innerhalb des äußeren Schichtelements angeordnet. Ggf. ist in dem Bereich, in dem das Zusatz-Schichtelement "chromatischer Zahnhals" angeordnet wird, kein äußeres Schichtelement mehr vorgesehen, da das äußere Schichtelement ggf. nicht bis in den unteren Bereich des Zahnhalses ragt. Insofern kann das Zusatz-Schichtelement "chromatischer Zahnhals" auch vollständig oder teilweise in dem Kernelement vorgesehen sein, wobei das Kernelement im Bereich des Zahnhalses ggf. die äußere Schicht des künstlichen Zahnelements ausbildet.

Vorzugweise ist das Zusatz-Schichtelement "chromatischer Zahnhals" durch die Außenkontur des äußeren Schichtelements begrenzt. Auch ist es zur Verbesserung des optischen Erscheinungsbildes möglich, dass das Zusatz-Schichtelement "chromatischer Zahnhals" teilweise unter dem äußeren Schichtelement angeordnet ist, insbesondere wenn das äußere Schichtelement sich vollständig bis zur Unterseite des Zahns erstreckt und somit zumindest ein Teil des Zahnhalses vom äußeren Schichtelement bedeckt ist.

Des Weiteren ist es insbesondere zur Ausgestaltung eines kontinuierlichen Farbübergangs möglich, die Schichtdicke des Zusatz-Schichtelements "chromatischer Zahnhals" zu verändern, so dass diese insbesondere in apikale und/oder inzisale bzw. okklusale Richtung abnimmt.

Zusätzlich oder anstelle der vorstehend beschriebenen Zusatz-Schichtelemente "Akzentuierung Mamelons" und/oder "chromatischer Zahnhals" ist es bevorzugt, ein Zusatz-Schichtelement "inzisaler/okklusaler optischer Effekt" vorzusehen. Bei dem Zusatz-Schichtelement "inzisaler/okklusaler optischer Effekt" handelt es sich insbesondere um das Zusatz-Schichtelement "Transluzenz-Effekt" oder "Halo-Effekt".

Ein Transluzenz-Effekt oder Transparenz-Effekt tritt häufig im inzisalen Bereich einer Krone oder eines Zahns auf. Vorzugsweise wird das Zusatz-Schichtelement "Transluzenz-Effekt" in einem inzisalen Randbereich des künstlichen Zahnelements innerhalb des äußeren Schichtelements angeordnet. Bevorzugt ist es hierbei, dass das Zusatz-Schichtelement "Transluzenz-Effekt" durch die Außenkontur des äußeren Schichtelements begrenzt ist, wobei insbesondere das Zusatz-Schichtelement "Transluzenz-Effekt" am äußeren Rand des künstlichen Zahns angeordnet ist, so dass das Zusatz-Schichtelement "Transluzenz-Effekt" die Außenkontur des Zahns bildet.

Vorzugsweise erfolgt zur Definition des Zusatz-Schichtelements "Transluzenz-Effekt" ein insbesondere automatisches Anordnen von Kontrollpunkten auf der Oberfläche des äußeren Schichtelements. Diese werden sodann apikal verschoben.

Das Zusatz-Schichtelement "Transluzenz-Effekt" wird vorzugsweise derart angeordnet wie anhand des Zusatz-Schichtelements "Akzentuierung Mamelons", bezogen auf die Definition des Polygons, beschrieben. Vorzugsweise erfolgt hierbei jedoch die Reduzierung der Außenkontur in geringerem Maße.

Vorzugsweise erfolgt das Verschieben entlang einer Normalen zur Oberfläche des äußeren Schichtelements. Besonders bevorzugt ist es, dass die Verschiebung um 0 bis 1 mm, insbesondere 0 bis 0,5 mm erfolgt.

Des Weiteren ist es bevorzugt, dass das Zusatz-Schichtelement "Transluzenz-Effekt" in dem Bereich zwischen der Oberfläche des äußeren Schichtelements vor und nach dem Verschieben ausgebildet ist. Hierbei ist es insbesondere bevorzugt, dass die Außenkontur des Zusatz-Schichtelements "Transluzenz-Effekt" durch die ursprüngliche Außenkontur des äußeren Schichtelements begrenzt ist.

Bei einem weiteren optischen Effekt handelt es sich um den Halo-Effekt. Insofern kann vom Zahnarzt oder Zahntechniker zusätzlich oder anstelle der vorstehend beschriebenen Zusatz-Schichtelemente das Zusatz-Schichtelement "Halo-Effekt" ausgewählt werden. Bei dem Halo-Effekt handelt es sich um eine leichte helle Akzentuierung der Inzisalkante des künstlichen Zahnelements. Diese ist üblicherweise schwächer ausgeprägt als die Transluzenz. Vorzugsweise erfolgt die Anordnung sowie die Größe etc. des Zusatz-Schichtelements "Halo-Effekt" entsprechend dem Zusatz-Schichtelement "Transluzenz-Effekt". Bevorzugt ist die Ausprägung des Zusatz-Schichtelements "Halo-Effekt" geringer als die Ausprägung des Zusatz-Schichtelements "Transluzenz-Effekt".

Bei einem weiteren zusätzlichen oder alternativen Zusatz-Schichtelement handelt es sich um das Zusatz-Schichtelement "Horizontalband".

Zur insbesondere automatischen Anordnung des Zusatz-Schichtelements "Horizontalband" ist es bevorzugt, dass zunächst eine horizontale Linie auf dem Zahnelement definiert wird. Bezogen auf die Höhe des Zahnelements ist es bevorzugt, die horizontale Linie etwa im mittleren Bereich des Zahnelements anzuordnen. Insbesondere erfolgt die Definition der Horizontallinie bezogen auf die Mitte der Höhe des Zahnelements ± 10%. Ausgehend von der Horizontallinie erstreckt sich das Horizontalband in beide Richtungen um eine vorgegebene Breite. Diese liegt vorzugsweise im Bereich von 0,3 bis 2 mm. Neben dieser inzisalen/apikalen Ausdehnung weist das Horizontalband vorzugsweise eine Tiefe von 0,2 bis 1,5 mm auf. Bevorzugt ist es ferner, dass das Horizontalband zwischen dem Kernelement und dem äußeren Schichtelement angeordnet ist und insbesondere in das Kernelement und/oder das äußere Schichtelement ragt.

Wie auch bei den anderen Zusatz-Schichtelementen kann auch bei dem Zusatz-Schichtelement "Horizontalband" ein Material, ggf. mehrere unterschiedliche Materialien sowie eine Farbgebung ausgewählt werden, wobei es sich wiederum auch um einen Farbverlauf oder unterschiedliche Farben handeln kann.

Bei einem weiteren Zusatz-Schichtelement handelt es sich um das Zusatz-Schichtelement "Flächeneffekt". Das Zusatz-Schichtelement "Flächeneffekt" wird auf der Grenzfläche (d.h. der Fläche zwischen dem Kernelement und dem äußeren Schichtelement) in einem Frontbereich angeordnet. Der Frontbereich ist der bei eingesetztem Zahnelement nach vorne weisende sichtbare Bereich des Zahns. Das Zusatz-Schichtelement "Flächeneffekt" ist insbesondere bei Schneidezähnen relevant. Zur Anordnung des Zusatz-Schichtelements "Flächeneffekt" kann auf der Grenzfläche ein insbesondere virtuelles Netz angeordnet werden. Dieses weist Kreuzungs- bzw. Schnittpunkte auf. Durch Auswahl entsprechender Schnittpunkte kann die Fläche definiert werden, in der das Zusatz-Schichtelement "Flächeneffekt" angeordnet wird. Das Zusatz-Schichtelement "Flächeneffekt" weist eine Breite von vorzugweise 1 bis 8 mm, eine Höhe von vorzugsweise 1 bis 10 mm und eine Tiefe von vorzugsweise 0,1 bis 1 mm auf. Ferner erstreckt sich das Zusatz-Schichtelement "Flächeneffekt" in das Kernelement und/oder das äußere Schichtelement.

Ggf. kann eine Überdeckung des Zusatz-Schichtelements "Akzentuierung Mamelons" mit dem Zusatz-Schichtelement "Flächeneffekt" oder auch mit dem Zusatz-Schichtelement "Horizontalband" erfolgen.

Besonders bevorzugt zur Durchführung des erfindungsgemäßen Verfahrens ist das Vorsehen eines virtuellen Netzes, das auf die Oberfläche des äußeren Schichtelements gelegt wird. Hierdurch können automatisch Kontrollpunkte, bei denen es sich insbesondere um Kreuzungspunkte der Netzlinien handelt, definiert werden. Diese Kontrollpunkte können sodann zur Definition der Lage und Ausdehnung einzelner Zusatz-Schichtelemente genutzt werden. Hierdurch ist insbesondere eine gute und automatische Platzierung der einzelnen Zusatz-Schichtelemente möglich.

Vorzugsweise ist die vertikale und horizontale Ausdehnung des virtuellen Netztes durch die maximale vertikale und horizontale Ausprägung der Außenkontur-Silhouette des Zahnelements definiert. Des Weiteren ist es bevorzugt, dass das Netz vertikale und horizontale Linien umfasst, die die Zahnkontur vorzugsweise äquidistant unterteilen. Die Außenkontur-Silhouette ist hierbei die projizierte Kontur des Zahnelements in Vorderansicht.

Sämtliche Zusatz-Schichtelemente können einzeln oder in Kombination miteinander angeordnet werden. Neben der bevorzugten Auswahl von Materialien, Farben, Farbverläufen und dergleichen kann ein Zahnarzt oder Zahntechniker auch die Position und die Ausprägung, z.B. das Maß der einzelnen Zusatz-Schichtelemente definieren. Vorzugsweise wird vom System in Abhängigkeit der Art und der patientenspezifischen Größe des Zahnelements eine Position und Ausprägung für die entsprechenden Zusatz-Schichtelemente automatisch vorgeschlagen. Entsprechende Maße können beispielsweise durch die definierte Größe bzw. die Außenabmessungen des Zusatz-Zahnelements insbesondere automatisch definiert werden. Auch ist es möglich, dass ein System automatisch Formgebungen, Materialien etc. vorschlägt. Dies kann beispielsweise durch einen über Fotografien bzw. Abbildungen erfolgenden automatischen Vergleich mit dem zu ersetzenden natürlichen Zahn bzw. anderen insbesondere benachbarten natürlichen Zähnen des Patienten erfolgen.

Nachfolgend wird die Erfindung anhand bevorzugter Ausführungsformen unter Bezugnahme auf die anliegenden Zeichnungen näher erläutert.

Es zeigen:
- Fig. 1: eine schematische Vorderansicht eines künstlichen Zahnelements eines Frontzahns,
- Fig. 2: eine schematische Seitenansicht eines künstlichen Zahnelements eines Frontzahns,
- Fign. 3 und 4: eine schematische Vorderansicht bzw. Seitenansicht eines künstlichen Zahnelements eines Frontzahns entsprechend Figuren 1 und 2, wobei zusätzliche Flächen und Kurven dargestellt sind,
- Fign. 5 und 6: eine schematische Vorderansicht bzw. Seitenansicht eines künstlichen Zahnelements eines Frontzahns entsprechend Figuren 1 und 2, wobei zusätzliche Flächen und Kurven dargestellt sind,
- Fig. 7: eine inzisale Ansicht des in Fig. 5 dargestellten Zahnelements,
- Fign. 8a bis 8c: alternative Darstellungen der Fig. 5 mit unterschiedlichen Tangentenwinkeln,
- Fig. 9: eine schematische Darstellung einer ersten und einer zweiten Flächenkontur,
- Fig. 10: eine schematische Vorderansicht eines Zahnelements eines Frontzahns entsprechend Figuren 1 und 2, wobei zusätzliche Flächen und Kurven dargestellt sind,
- Fig. 11: eine schematische Seitenansicht entlang der Schnittebene XI in Fig. 10,
- Fig. 12: eine schematische Seitenansicht eines künstlichen Zahnelements eines Seitenzahns,
- Fig. 13: eine schematische Ansicht von inzisal des in Fig. 12 dargestellten künstlichen Zahnelements eines Seitenzahns,

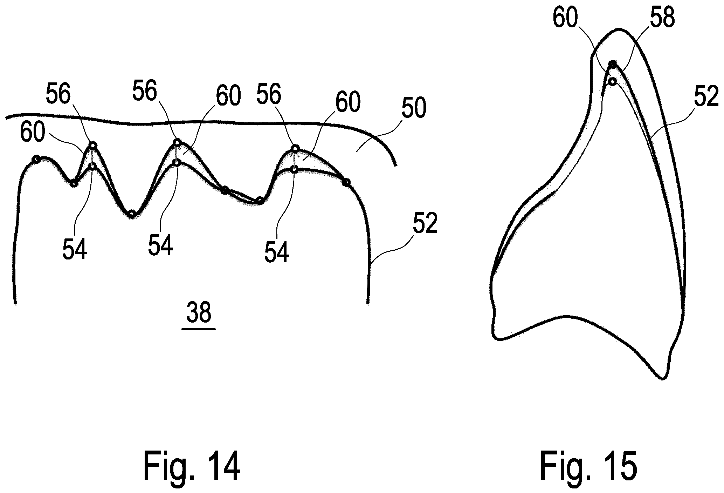

- Fig. 14: eine schematische Vorderansicht eines Ausschnitts eines künstlichen Zahnelements zur Bestimmung der Anordnung des Zusatz-Schichtelements "Akzentuierung Mamelons",
- Fig. 15: eine Seitenansicht des in Fig. 14 dargestellten künstlichen Zahnelements,
- Fig. 16: eine Vorderansicht sowie eine Seitenansicht eines künstlichen Zahnelements zusammen mit dem Zusatz-Schichtelement "Akzentuierung Mamelons",
- Fig. 17: eine Vorderansicht sowie eine Seitenansicht eines künstlichen Zahnelements zur Darstellung des Zusatz-Schichtelements "chromatischer Zahnhals",
- Fig. 18: eine Detailansicht eines künstlichen Zahnelements zur Verdeutlichung des Zusatz-Schichtelements "chromatischer Zahnhals",
- Fig. 19: eine Vorderansicht sowie eine Seitenansicht eines künstlichen Zahnelements zur Verdeutlichung des Zusatz-Schichtelements "Transluzenz-Effekt",
- Fig. 20: eine Vorderansicht sowie eine Seitenansicht eines künstlichen Zahnelements zur Verdeutlichung des Zusatz-Schichtelements "Horizontalband",
- Fig. 21: eine Vorderansicht sowie Seitenansichten eines künstlichen Zahnelements zur Verdeutlichung des Zusatz-Schichtelements "Flächeneffekt",

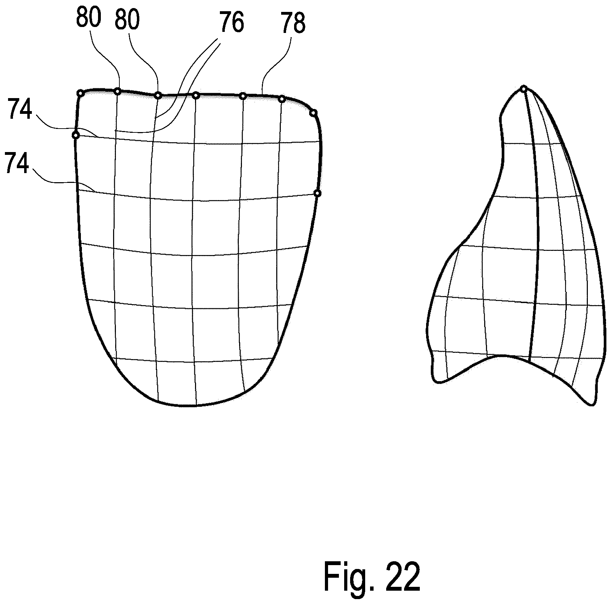

- Fig. 22: eine Vorderansicht sowie eine Seitenansicht eines künstlichen Zahnelements mit virtuellem Netz,
- Fig. 23: eine Vorderansicht sowie eine Seitenansicht eines künstlichen Zahnelements mit virtuellem Netz in Verbindung mit der Herstellung des Zusatz-Schichtelements "Transluzenz-Effekt" und
- Fig. 24: eine Vorderansicht sowie eine Seitenansicht eines künstlichen Zahnelements mit virtuellem Netz in Verbindung mit der Herstellung des Zusatz-Schichtelements "Flächeneffekt".

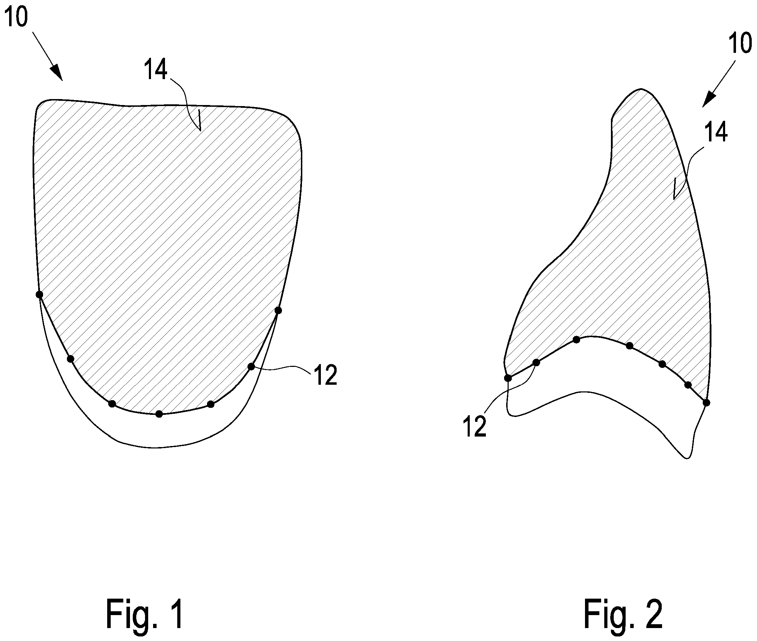

Zur Durchführung des erfindungsgemäßen Verfahrens ist zunächst die Definition einer Grenzfläche zwischen einem inneren Kernelement und einem dieses Kernelement zumindest teilweise umgebenden äußeren Schichtelement erforderlich. Ein mögliches Verfahren zur Definition dieser Grenzfläche ist nachfolgend anhand der Figuren 1 bis 13 näher erläutert.

In den Figuren 1 und 2 ist ein künstliches Zahnelement 10 eines Frontzahns in Vorder- und in Seitenansicht dargestellt. Hierbei handelt es sich um die dreidimensionale Außenkontur des Zahnelements, wobei vorzugsweise ein entsprechender Datensatz geöffnet wurde, der die Daten der dreidimensionalen Außenkontur des Zahnelements umfasst. Nach dem Ausrichten des Zahnelements 10 an einem (nicht dargestellten) Koordinatensystem erfolgt eine Definition einer ersten Grenzkurve 12, wobei die erste Grenzkurve 12 manuell und/oder auf Basis einer Präparationsgrenze oder auf Basis eines Zahnäquators erfolgen kann. In inzisaler Richtung, d.h. in Figuren 1 und 2 oberhalb der ersten Grenzkurve 12, ist durch die erste Grenzkurve 12 eine Zahnoberfläche 14 definiert.

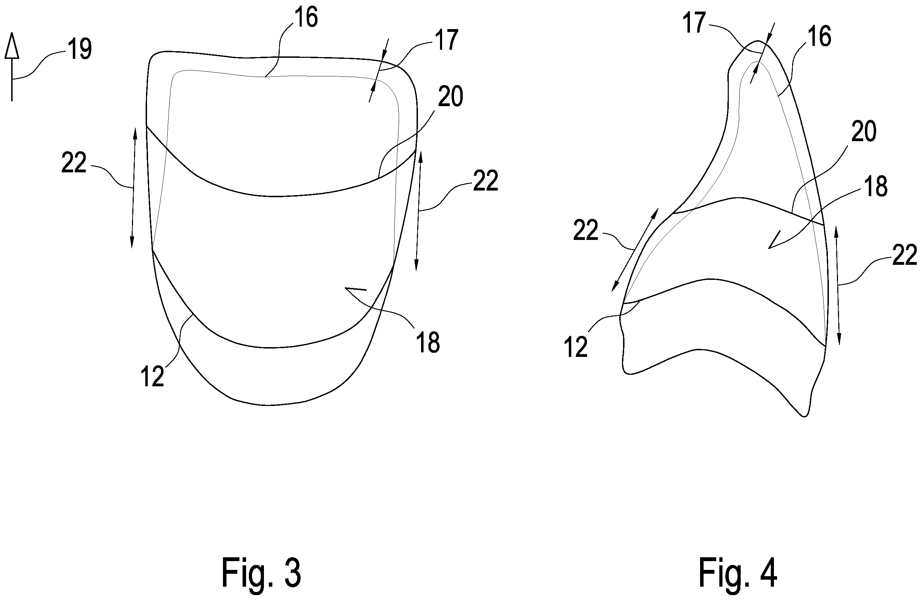

Die Zahnoberfläche 14 wird nach innen in Richtung der Flächennormalen zur Erzeugung einer ersten Grenzfläche 16 (Figuren 3 und 4) verschoben. Hierbei ist als Beispiel eine maximale Verschiebung 17 dargestellt.

Wie in Figuren 3 und 4 dargestellt, kann anhand einer bevorzugten Ausführungsform der Erfindung ausgehend von der ersten Grenzkurve 12 eine sich in inzisaler Richtung 19 erstreckende Übergangsfläche 18 definiert werden. Im dargestellten Ausführungsbeispiel erfolgt das Definieren der Übergangsfläche 18 derart, dass eine zweite Grenzkurve 20 definiert wird. Die zweite Grenzkurve 20 kann durch eine Projektion der ersten Grenzkurve 12 um eine erste Länge 22 erfolgen.

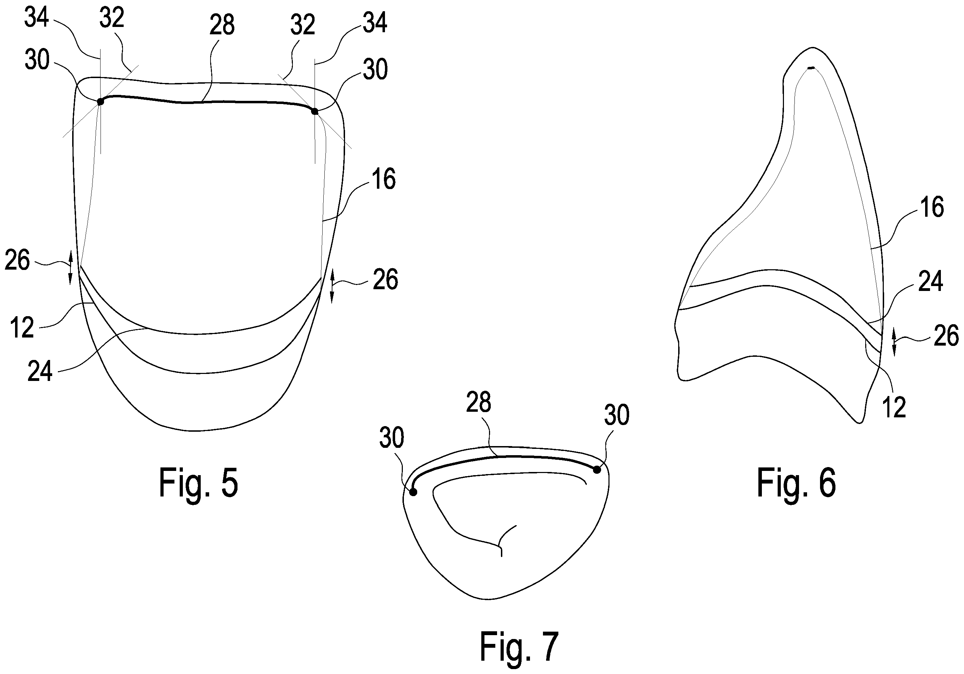

Im dargestellten Ausführungsbeispiel erfolgt ferner die Definition einer dritten Grenzkurve 24 (Figuren 5 und 6). Die dritte Grenzkurve 24 kann durch Projektion der ersten Grenzkurve 12 um eine zweite Länge 26 erfolgen.

Die höchste Kurve auf der durch die erste maximale Verschiebung erstellten ersten Grenzfläche (16) ist als inzisale/okklusale erste Flächenkontur 28 definiert. Die erste Flächenkontur 28 weist zwei Grenzen 30 bzw. insbesondere einen Anfang und ein Ende auf. Die Grenzen 30 werden hierbei durch Tangenten 32 definiert. In Fig. 5 weisen die Tangenten 32 einen Winkel von ca. 45° zur Zahnachse 34 auf.

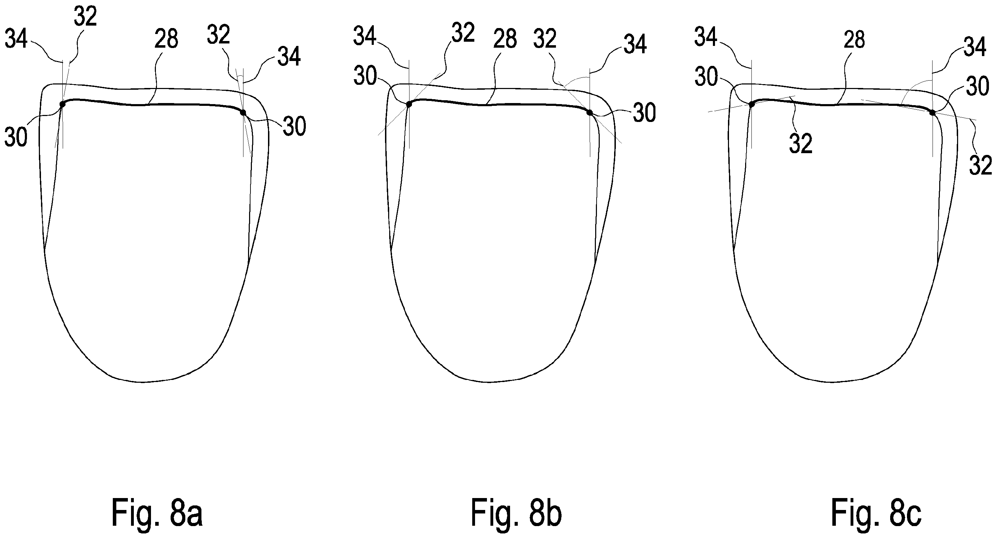

Wie in den Figuren 8a bis 8c dargestellt, ändert sich die Lage der Grenzen 30 bei einer Veränderung des Tangentenwinkels.

In Draufsicht bzw. in Ansicht von inzisal (Fig. 7) ist der Verlauf der ersten Flächenkontur 28 dargestellt.

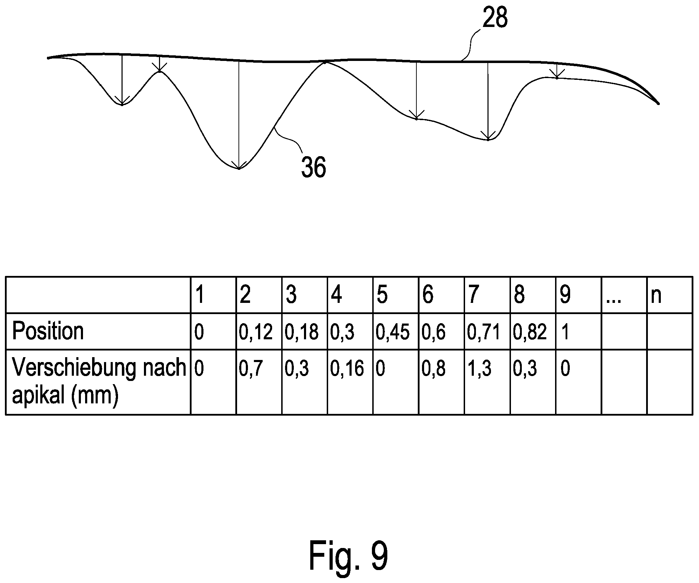

Auf der Flächenkontur wird eine Anzahl Knotenpunkte (Fig. 9) definiert. Diese Knotenpunkte sind als Beispiel in Fig. 9 mit Knotenpunkt 1 bis Knotenpunkt 9 bezeichnet und tabellarisch aufgeführt. Wie durch Pfeile dargestellt, erfolgt ein Verschieben der Knotenpunkte, die sich auf der ersten Flächenkontur 28 befinden, in apikaler Richtung. Das Verbinden der verschobenen Knoten ergibt die zweite Flächenkontur 36.

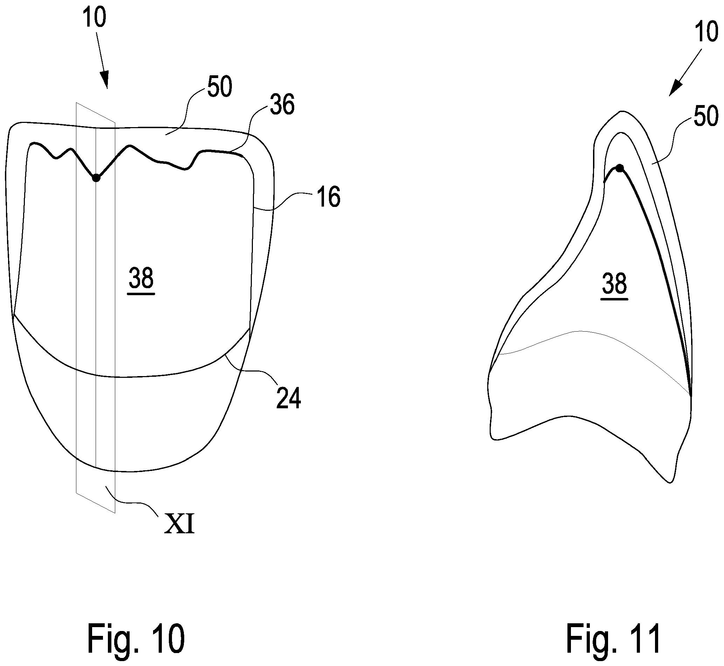

Aus den vorstehenden Verfahrensschritten ergibt sich sodann im dargestellten Ausführungsbeispiel eine dreidimensionale Grenzfläche, die durch die dritte Grenzkurve 24 Teile der ersten Grenzfläche 16 sowie die zweite Flächenkontur 36 definiert ist (Figuren 10 und 11). Innerhalb dieser dreidimensionalen Fläche, d.h. in dem Raum 38, ist in bevorzugter erfindungsgemäßer Ausführungsform ein anderes Material vorgesehen als in den diesen Raum umgebenden Volumen des künstlichen Zahnelements 10. Diese beiden Volumina werden insbesondere durch unterschiedliche Materialien definiert, wobei das innere Volumen 38 das Dentin nachbildet. Hierbei ist die Grenzfläche zwischen dem das Dentin ausbildenden Volumen und dem umgebenden Volumen nicht mit der entsprechenden Grenzfläche des zugehörigen natürlichen Zahns identisch.

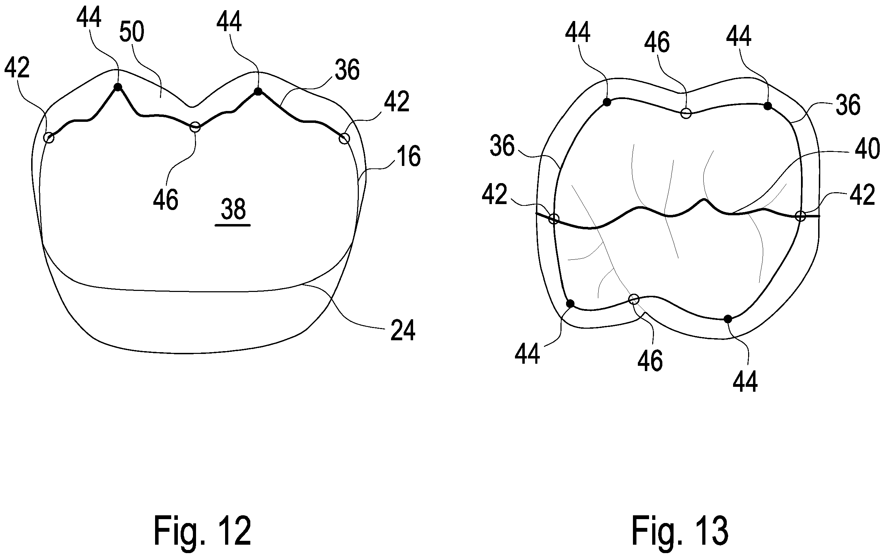

In den Figuren 12 und 13 sind die entsprechenden Konturen bei einem Seitenzahn dargestellt, wobei diese den dem vorstehenden Rand eines Frontzahns beschriebenen Konturen entsprechen. Zusätzlich ist die Mittelfissur 40 (Fig. 13) dargestellt. Die die Mittelfissur 40 darstellende Linie weist zwei Grenzpunkte 42 auf, die jeweils den Höckeranfang bzw. das Höckerende darstellen. Des Weiteren sind auf der zweiten Flächenkontur 36 Höckerspitzen 44 eingezeichnet. Ein Punkt 46 bezeichnet ein Höckerende und Höckeranfang des nächsten Höckers.

Bei einer entsprechend den vorstehenden Verfahrensschritten definierten dreidimensionalen Grenzfläche bildet das innere Volumen 38 das innere Kernelement und das das innere Volumen 38 umgebende Volumen 50 das äußere Schichtelement.

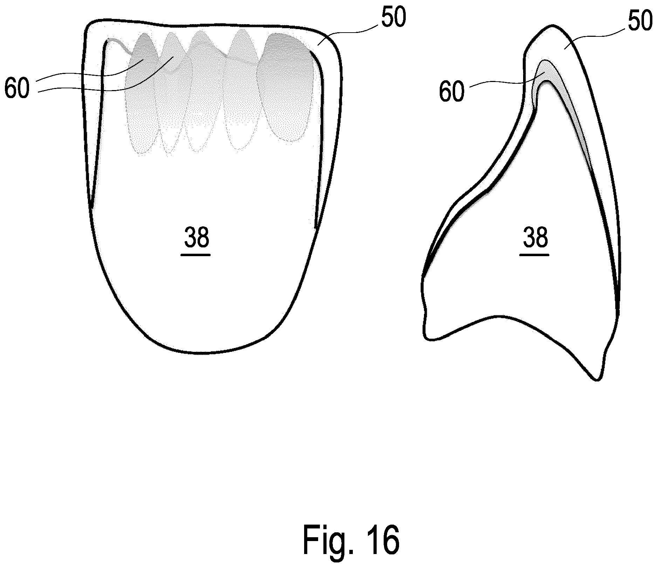

Zur Anordnung des Zusatz-Schichtelements "Akzentuierung Mamelons" werden auf der Silhouettenkurve 52, d.h. der Grenzkurve zwischen dem inneren Kernelement 38 und dem äußeren Schichtelement 50 in bevorzugter Ausführungsform Hochpunkte 54 definiert. Die Hochpunkte 54 werden nach inzisal verschoben, so dass Punkte 56 definiert werden. Entsprechend wird die Lage der Silhouettenkurve 52 verändert. Zwischen der Silhouettenkurve 52 und der nach dem inzisalen Verschieben durch die Punkte 56 definierten Grenzfläche 58 entstehen Zwischenräume 60. In diesen Zwischenräumen 60 werden die Zusatz-Schichtelemente "Akzentuierung Mamelons" angeordnet. Diese können unterschiedlich eingefärbt oder aus unterschiedlichen Materialien hergestellt sein, wie insbesondere in Fig. 16 angedeutet.

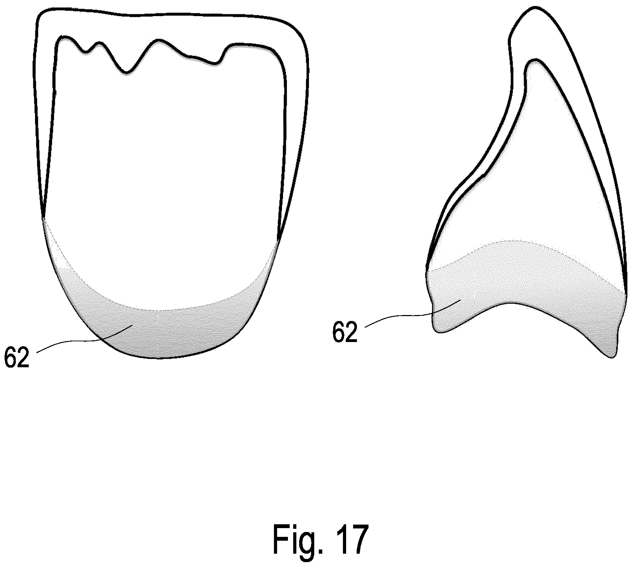

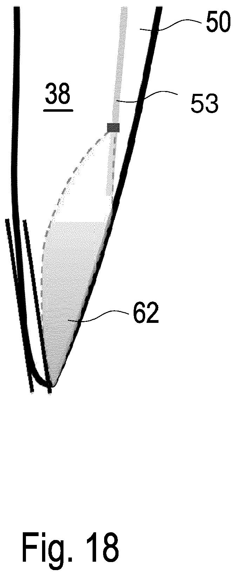

In den Figuren 17 und 18 ist ein Beispiel für das Zusatz-Schichtelement "chromatischer Zahnhals" dargestellt. Wie ersichtlich, wird das künstliche Zahnelement im Bereich des Zahnhalses eingefärbt, so dass ein zusätzliches Element angeordnet ist. Das Zusatz-Schichtelement "chromatischer Zahnhals" 62 kann, wie aus Fig. 18 ersichtlich, zumindest teilweise innerhalb des Kernelements 38 angeordnet sein. Dies ist insbesondere dadurch definiert, wo die Grenzfläche 53 angeordnet ist. Das Zusatz-Schichtelement "chromatischer Zahnhals" ist vorzugsweise durch die Außenkontur des äußeren Schichtelements 50 begrenzt. Ebenso ist es möglich, dass zur Veränderung des optischen Erscheinungsbildes das Zusatz-Schichtelement "chromatischer Zahnhals" 62 teilweise innerhalb der äußeren Schicht angeordnet ist, so dass das äußere Schichtelement 50 das Zusatz-Schichtelement "chromatischer Zahnhals" 62 mit einer ggf. dünnen Schicht bedeckt.

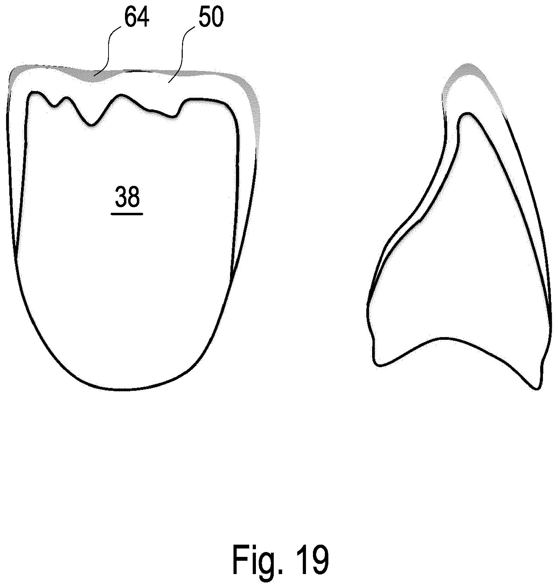

Bei einem weiteren in Fig. 19 schematisch dargestellten Zusatz-Schichtelement handelt es sich um das Zusatz-Schichtelement "Transluzenz-Effekt" 64. Hierbei handelt es sich um ein Zusatz-Schichtelement, das im inzisalen Randbereich des künstlichen Zahnelements innerhalb des äußeren Schichtelements 50 vorgesehen ist. Zur Definition der Lage und Ausgestaltung der Zusatz-Schichtelemente "Transluzenz-Effekt" 64 können auf einer oberen Fläche des äußeren Schichtelements Kontrollpunkte definiert werden, die sodann nach innen, d.h. in Richtung des inneren Kernelements verschoben werden.

Die äußere Grenze des Zusatz-Schichtelements "Transluzenz-Effekt" stellt hierbei in bevorzugter Ausführungsform die äußere Oberfläche des äußeren Schichtelements 50 dar.

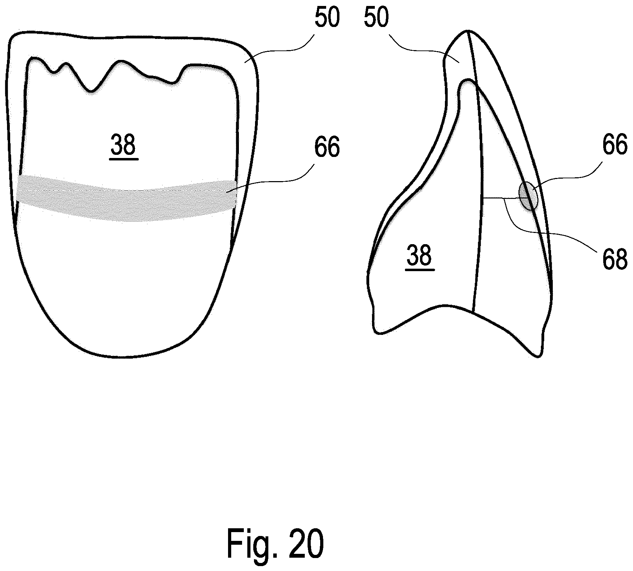

Bei einem weiteren insbesondere in Fig. 20 dargestellten Zusatz-Schichtelement "Horizontalband" 66 handelt es sich um eine horizontale Linie, die etwa im mittleren Bereich des künstlichen Zahnelements angeordnet ist. Das Horizontalband erstreckt sich vorzugsweise ausgehend von einer etwa in Höhe der Mitte des Zahnelements angeordneten Horizontalline 68. Im Querschnitt kann das Horizontalband 66 elliptisch ausgestaltet sein. Insbesondere ragt das Horizontalband 66 teilweise in das äußere Schichtelement 50 und ist teilweise innerhalb des inneren Teilelements 38 angeordnet.

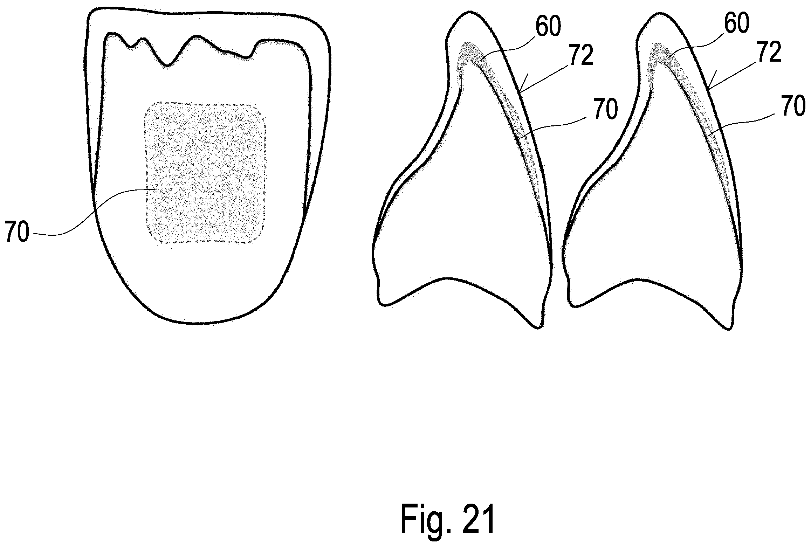

Bei einem weiteren Zusatz-Schichtelement (Fig. 21) handelt es sich um das Zusatz-Schichtelement "Flächeneffekt" 70. Dieses ist in einem Frontbereich des künstlichen Zahnelements vorzugsweise zwischen dem Kernelement 38 und dem äußeren Schichtelement 50 angeordnet. Sofern in vertikaler Richtung eine Überdeckung zwischen dem Zusatz-Schichtelement "Flächeneffekt" 70 und dem Zusatz-Schichtelement "Akzentuierung Mamelons" 60 gegeben ist, kann das Zusatz-Schichtelement "Flächeneffekt" bezogen auf eine Vorderseite 72 eines in Fig. 1 dargestellten Schneidezahns vor oder hinter dem Zusatz-Schichtelement "Akzentuierung Mamelons" 60 angeordnet sein.

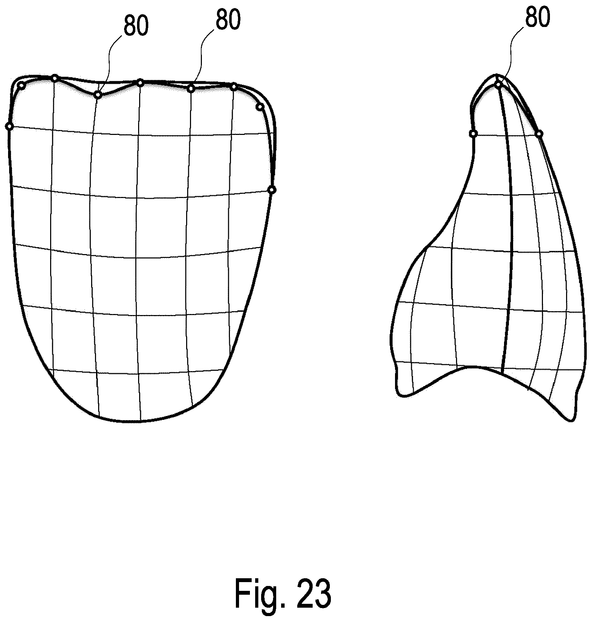

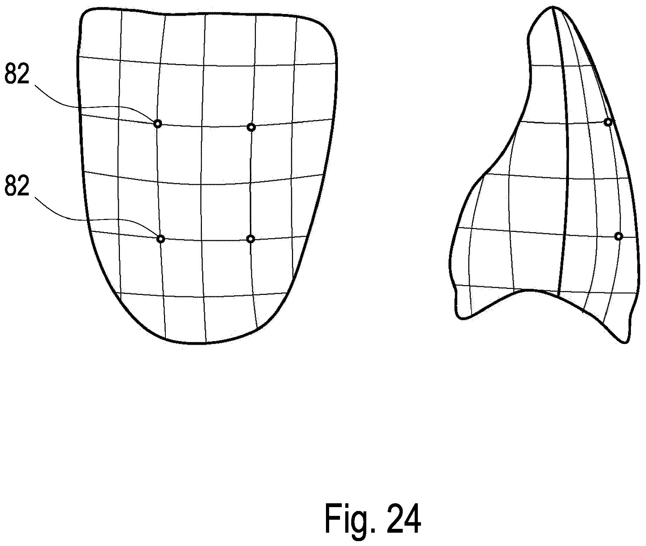

Zur Durchführung und insbesondere zur zumindest teilweisen Automatisierung des erfindungsgemäßen Verfahrens ist vorzugsweise ein virtuelles Netz (Figuren 23 bis 24) vorgesehen. Das virtuelle Netz weist insbesondere äquidistant angeordnete horizontale Linien 74 sowie vertikale Linien 76 auf. Als äußere Begrenzung weist das Netz die Außenkontursilhouette 78 des künstlichen Zahnelements auf. Durch Berührungspunkte der vertikalen und horizontalen Linien 74, 76 mit der Außenkontursilhouette können Knotenpunkte 80 definiert werden. Weite Knotenpunkte 82, s. beispielsweise Fig. 24, können an den Kreuzungsstellen der horizontalen und vertikalen Linien 74, 76 definiert werden.

Mit Hilfe der einzelnen Knotenpunkte 80, 82 kann die Anordnung, Ausrichtung, Größe etc. der einzelnen Zusatz-Schichtelemente auf einfache Weise, insbesondere auch automatisch definiert und angepasst werden.

Beispielsweise können die auf der Silhouette 78 angeordneten Knotenpunkte 80 für den Transluzenz-Effekt genutzt werden, indem einzelne Punkte, wie aus Fig. 23 ersichtlich, verschoben werden.

Knotenpunkte 82 können, wie beispielsweise aus Fig. 24 ersichtlich, zur Definition der Lage des Flächeneffekts genutzt werden. Andere Knotenpunkte können zur Definition der übrigen Zusatz-Schichtelemente genutzt werden.

## Patentansprüche

1. Computerimplementiertes Verfahren zur Definition unterschiedlicher Schichtelemente eines künstlichen Zahnelements mit den Schritten:
Bestimmen einer dreidimensionalen Außenkontur des künstlichen Zahnelements,
Definieren einer Grenzfläche zwischen einem inneren Kernelement (38) und einem das innere Kernelement (38) zumindest teilweise umgebenden äußeren Schichtelement (50),
**gekennzeichnet durch** die weiteren Schritte:
Auswahl mindestens eines Zusatz-Schichtelements (60, 62, 64, 66) aus einer bereitgestellten, mehrere Zusatz-Schichtelemente enthaltenden Auswahlliste, die zumindest umfasst: Akzentuierung Mamelons, wobei bei Auswahl des Zusatz-Schichtelements "Akzentuierung Mamelons", das Zusatz-Schichtelement (50) "Akzentuierung Mamelons" automatisch am Kernelement im Bereich eines von der Grenzfläche definierten Mamelons angeordnet wird, wobei das Zusatz-Schichtelement "Akzentuierung Mamelons" am Kernelement (38) im Bereich des zumindest einen, vorzugsweise aller von der Grenzfläche definierten Mamelons ein das zumindest eine, insbesondere alle Mame-Ions zumindest teilweise umhüllendes Zusatz-Schichtelement "Akzentuierung Mamelons" angeordnet wird und automatisches Anordnen des mindestens einen ausgewählten Zusatz-Schichtelements (60, 62, 64, 66) in räumlich definiertem Bezug zu dem Kernelement (38).

2. Verfahren nach Anspruch 1, wobei die Auswahlliste ferner folgende Zusatz-Schichtelemente umfasst:
chromatischer Zahnhals und/oder Transluzenz-Effekt und/oder Halo Effekt und/oder Horizontalband und/oder Flächeneffekt und
wobei bei Auswahl eines dieser Zusatz-Schichtelemente, das ausgewählte Schichtelement automatisch in einem räumlich definierten Bezug zu dem Kernelement (38) und/oder dem äußeren Schichtelement (50) angeordnet wird.

3. Verfahren nach Anspruch 1 oder 2, bei welchem zumindest für einzelne Zusatz-Schichtelemente (60, 62, 64, 66) ein Material und/oder eine Farbe auswählbar sind.

4. Verfahren nach Anspruch 3, **dadurch gekennzeichnet, dass** das Zusatz-Schichtelement "Akzentuierung Mamelons" zumindest teilweise innerhalb des äußeren Schichtelements (50) angeordnet ist.

5. Verfahren nach Anspruch 3 oder 4, **dadurch gekennzeichnet, dass** zur Ausbildung des Zusatz-Schichtelements "Akzentuierung Mamelons" ein insbesondere inzisales Verschieben der Grenzfläche an zumindest einem Mamelon erfolgt, wobei insbesondere durch Höhepunkte definierte Kontrollpunkte zumindest eines Mamelons inzisal verschoben werden,
wobei das Zusatz-Schichtelement "Akzentuierung Mamelons" vorzugsweise in dem Bereich zwischen der Grenzfläche vor und nach dem Verschieben der Grenzfläche ausgebildet ist und/oder die Verschiebung 0 bis 1,0 mm, insbesondere 0 bis 0,7 mm beträgt.

6. Verfahren nach einem der Ansprüche 1-5, bei welchem bei Auswahl des Zusatz-Schichtelements "chromatischer Zahnhals" in einem apikal zu einer Grenzkurve gelegenen Bereich des äußeren Schichtelements ein Material des äußeren Schichtelements zumindest teilweise eingefärbt wird.

7. Verfahren nach einem der Ansprüche 1-6, bei welchem beim Auswählen des Zusatz-Schichtelements "chromatischer Zahnhals" in einem apikal zu der Grenzkurve gelegenen Bereich zumindest teilweise das äußere Schichtelement (50) durch das Zusatz-Schichtelement "chromatischer Zahnhals" ersetzt wird und/oder bei welchem die Außenkontur des Zusatz-Schichtelements "chromatischer Zahnhals" durch die Außenkontur des äußeren Schichtelements (50) begrenzt ist.

8. Verfahren nach einem der Ansprüche 1-7, bei welchem beim Auswählen des Zusatz-Schichtelements "inzisaler/okklusaler optischer Effekt", der insbesondere das Zusatz-Schichtelement "Transluzenz-Effekt" und/oder das Zusatz-Schichtelement "Halo-Effekt" umfasst, in einem inzisalen Randbereich des künstlichen Zahnelements das Zusatz-Schichtelement "inzisaler/okklusaler optischer Effekt" innerhalb des äußeren Schichtelements (50) angeordnet wird.

9. Verfahren nach Anspruch 8, bei welchem das Zusatz-Schichtelement "inzisaler/okklusaler optischer Effekt" durch die Außenkontur des äußeren Schichtelements (50) begrenzt ist und/oder bei welchem zur Definition des Zusatz-Schichtelements "inzisaler/okklusaler optischer Effekt" auf der Oberfläche des äußeren Schichtelements (50) definierte Kontrollpunkte apikal verschoben werden, wobei das Verschieben vorzugsweise entlang einer Normalen zur Oberfläche des äußeren Schichtelements (50) erfolgt.

10. Verfahren nach Anspruch 8 oder 9, bei welchem ein Verschieben um 0 bis 1 mm, insbesondere 0 bis 0,5 mm erfolgt und/oder bei welchem das Zusatz-Schichtelement "inzisaler/okklusaler optischer Effekt" in dem Bereich zwischen der Oberfläche vor und nach dem Verschieben ausgebildet ist und/oder bei welchem die Außenkontur des Zusatz-Schichtelements "inzisaler/okklusaler optischer Effekt" durch die Außenkontur des äußeren Schichtelements (50) begrenzt ist.

11. Verfahren nach einem der Ansprüche 1-10, bei welchem bei Auswahl des Zusatz-Schichtelements "Horizontalband" eine horizontale Mittellinie definiert wird und im Bereich der Mittellinie das Zusatz-Schichtelement "Horizontalband" zwischen dem Kernelement (38) und dem äußeren Schichtelement (50) angeordnet wird, wobei das Zusatz-Schichtelement "Horizontalband" in das Kernelement (38) und/oder das äußere Schichtelement (50) ragt,
wobei das Zusatz-Schichtelement "Horizontalband" vorzugsweise eine inzisale/apikale Ausdehnung von 0,3 bis 2 mm und/oder eine Tiefe von 0,2 bis 1,5 mm aufweist.

12. Verfahren nach einem der Ansprüche 1-11, bei welchem bei Auswahl des Zusatz-Schichtelements "Flächeneffekt" auf der Grenzfläche in einem Frontbereich das Zusatz-Schichtelement "Flächeneffekt" angeordnet wird, wobei sich vorzugsweise das Zusatz-Schichtelement "Flächeneffekt" teilweise mit dem Zusatz-Schichtelement "Akzentuierung Mame-Ions" überdeckt,
wobei das Zusatz-Schichtelement "Flächeneffekt" vorzugsweise eine Breite von 1 bis 8 mm, eine Höhe von 1 bis 10 mm und eine Tiefe von 0,1 bis 1 mm aufweist.

13. Verfahren nach Anspruch 12, **dadurch gekennzeichnet, dass** das Zusatz-Schichtelement "Flächeneffekt" im Kernelement (38) und/oder im äußeren Schichtelement (50) angeordnet ist und insbesondere durch die Außenkontur des äußeren Schichtelements (50) begrenzt ist.

14. Verfahren nach einem der Ansprüche 1-13, bei welchem zur automatischen Definition von Kontrollpunkten auf die Oberfläche des äußeren Schichtelements (50) ein virtuelles Netz gelegt wird, wobei die vertikale und horizontale Ausdehnung des Netzes durch die maximale Ausdehnung der Außenkontur-Silhouette definiert ist, wobei das Netz vorzugsweise eine Mehrzahl vertikaler und/oder horizontaler Linien umfasst, die die Zahnkontur insbesondere äquidistant unterteilen.

15. Verfahren nach Anspruch 14, **dadurch gekennzeichnet, dass** die Schnittpunkte der horizontalen und vertikalen Linien die Kontrollpunkte (82) definieren und/oder dass an Schnittpunkten der vertikalen und/oder horizontalen Linie mit einer Außenkontur-Silhouette Kontrollpunkte (80) definiert werden.

## Claims

1. Computer-implemented method for defining different layer elements of an artificial tooth element comprising the steps of:
determining a three-dimensional, outer contour of the artificial tooth element,
defining an interface between an inner core element (38) and an outer layer element (50) which surrounds the inner core element (38) at least in part,
**characterized by** the further steps of
selecting at least one additional layer element (60, 62, 64, 66) from a provided selection list containing a plurality of additional layer elements, which includes:
accentuation of mamelons, wherein when selecting the additional layer element "accentuation of mamelons", the additional layer element (50) "accentuation of mamelons" is automatically arranged at the core element in the region of a mamelon defined by the interface, wherein the additional layer element "accentuation of mamelons" is arranged at the core element (38) in the region of the at least one, preferably all mamelons defined by the interface and an additional layer element "accentuation of mamelons" is arranged which at least partly surrounds the at least one, preferably all mamelons defined by the interface, and
automatically arranging the at least one selected additional layer element (60, 62, 64, 66) in spatially defined relation to the core element (38).

2. Method according to claim 1, **characterized in that** the selection list further includes the following additional layer elements:
chromatic tooth neck and/or translucence effect and/or halo effect and/or horizontal band and/or surface effect, and
wherein, when selecting one of these additional layer elements, the selected additional layer element (60, 62, 64, 66) is automatically arranged in spatially defined relation to the core element (38) and/or the outer layer element (50).

3. Method according to one of claims 1 or 2, in which a material and/or a color can be selected at least for individual additional layer elements (60, 62, 64, 66).

4. Method according to claim 3, **characterized in that** the additional layer element "accentuation of mamelons" is arranged at least partly within the outer layer element (50).

5. Method according to one of claims 3 or 4, **characterized in that** for forming the additional layer element "accentuation of mamelons", the interface at at least one mamelon is displaced in particular incisally, wherein control points of at least one mamelon, which are defined in particular by height points, are displaced incisally,
wherein the additional layer element "accentuation of mamelons" is formed preferably in the region between the interface prior to and after the displacement and/or the displacement is 0 to 1.0 mm, in particular 0 to 0.7 mm.

6. Method according to one of claims 1-5, in which, when selecting the additional layer element "chromatic tooth neck", a material is at least partly colored in a region of the outer layer element located apically with respect to a boundary curve.

7. Method according to one of claims 1-6, in which, when selecting the additional layer element "chromatic tooth neck", the outer layer element (50) is replaced at least partly with the additional layer element "chromatic tooth neck" in a region located apically with respect to a boundary curve and/or in which the outer contour of the additional layer element "chromatic tooth neck" is limited by the outer contour of the outer layer element (50).

8. Method according to one of claims 1-7, in which, when selecting the additional layer element "incisal/occlusal optical effect", which includes in particular the additional layer element "translucence effect" and/or the additional layer element "halo effect", the additional layer element "incisal/occlusal optical effect" is arranged within the outer layer element (50) in an incisal edge region of the artificial tooth element.

9. Method according to claim 8, in which the additional layer element "incisal/occlusal optical effect" is limited by the outer contour of the outer layer element (50) and/or in which, for the definition of the additional layer element "incisal/occlusal optical effect", control points defined on the surface of the outer layer element (50) are displaced apically, wherein the displacement occurs preferably along a normal to the surface of the outer layer element (50).

10. Method according to claim 8 or 9, in which a displacement by 0 to 1 mm, in particular 0 to 0.5 mm occurs and/or in which the additional layer element "incisal/occlusal optical effect" is formed in the region between the surface prior to and after the displacement and/or in which the outer contour of the additional layer element "incisal/occlusal optical effect" is limited by the outer contour of the outer layer element (50).

11. Method according to one of claims 1-10, in which, when selecting the additional layer element "horizontal band", a horizontal centre line is defined and the additional layer element "horizontal band" is arranged between the core element (38) and the outer layer element (50) in the region of the centre line, wherein the additional layer element "horizontal band" protrudes into the core element (38) and/or the outer layer element (50),
wherein the additional layer element "horizontal band" preferably comprises an incisal/apical dimension from 0.3 to 2 mm and/or a depth from 0.2 to 1.5 mm.

12. Method according to one of claims 1-11, in which, when selecting the additional layer element "surface effect", the additional layer element "surface effect" is arranged on the interface in a front region. wherein, preferably, the additional layer element "surface effect" partly overlaps with the additional layer element "accentuation of mamelons",
wherein the additional layer element "surface effect" preferably has a width of 1 to 8 mm, a height of 1 to 10 mm and a depth of 0.1 to 1 mm.

13. Method of claim 12, **characterized in that** the additional layer element "surface effect" is arranged in the core element (38) and/or in the outer layer element (50) and is limited in particular by the outer contour of the outer layer element (50).

14. Method according to one of claims 1-13, in which, for an automatic definition of control points, a virtual grid is applied on the surface of the outer layer element (50), wherein the vertical and the horizontal dimension of the grid is defined by the maximum dimension of the outer contour silhouette, wherein the grid preferably comprises a plurality of vertical and/or horizontal lines that divide the tooth contour in particular equidistantly.

15. Method according to claim 14, **characterized in that** the intersection points of the horizontal and vertical lines define the control points (82) and/or in which control points (80) are defined at intersection points of the vertical and/or horizontal lines and an outer contour silhouette.

## Revendications

1. Procédé, mis en œuvre par ordinateur, de définition de différents éléments de couche d'un élément dentaire artificiel, avec les étapes :
déterminer un contour extérieur en trois dimensions de l'élément dentaire artificiel, définir une surface limite entre un élément de base intérieur (38) et un élément de couche extérieur (50) entourant l'élément de base intérieur (38) au moins partiellement,
**caractérisé par** les étapes suivantes :
sélection d'au moins un élément de couche supplémentaire (60, 62, 64, 66) dans une liste mise à disposition et contenant plusieurs éléments de couche supplémentaires qui comprend au moins :
mise d'un accent sur les mamelons,
lors de la sélection de l'élément de couche supplémentaire « mise d'un accent sur les mamelons », l'élément de couche supplémentaire (50) « mise d'un accent sur les mamelons » étant disposé automatiquement sur l'élément de base dans la zone d'un mamelon défini par la surface limite,
agencement de l'élément de couche supplémentaire « mise d'un accent sur les mamelons » sur l'élément de base (38) dans la zone dudit au moins un mamelon, de préférence de tous les mamelons définis par la surface limite, et agencement d'un élément de couche supplémentaire « mise d'un accent sur les mamelons », entourant ledit au moins un, notamment tous les mamelons, et
agencement automatique dudit au moins un élément de couche supplémentaire choisi (60, 62, 64, 66) avec un rapport à l'élément de base (38), rapport défini dans l'espace.

2. Procédé selon la revendication 1, la liste de sélection comprenant en outre les éléments de couche supplémentaires suivants :
collet de la dent chromatique et/ou effet de translucidité et/ou effet de halo et/ou bande horizontale et/ou effet de surface, et
lors de la sélection de l'un de ces éléments de couche supplémentaire, l'élément de couche supplémentaire choisi étant disposé automatiquement avec un rapport à l'élément de base (38) et/ou à l'élément de couche extérieure (50), rapport défini dans l'espace.

3. Procédé selon la revendication 1 ou 2, dans lequel, au moins pour certains éléments de couche supplémentaires (60, 62, 64, 66), un matériau et/ou une couleur peuvent être choisis.

4. Procédé selon la revendication 3, **caractérisé en ce que** l'élément de couche supplémentaire « accentuation des mamelons » est disposé au moins partiellement à l'intérieur de l'élément de couche extérieur (50).

5. Procédé selon la revendication 3 ou 4, **caractérisé en ce que**, pour la formation de l'élément de couche supplémentaire « accentuation des mamelons », un déplacement, notamment incisal, de la surface limite étant effectué à au moins un mamelon, des points de contrôle définis notamment par des sommums d'au moins un mamelon étant déplacés de façon incisale,
l'élément de couche supplémentaire « mise d'accents sur les mamelons » étant configuré de préférence dans la zone entre la surface limite avant et après le déplacement de la surface limite et/ou le déplacement étant de 0 à 1,0 mm, notamment de 0 à 0,7 mm.

6. Procédé selon l'une des revendications 1 à 5, au cours duquel, lors de la sélection de l'élément de couche supplémentaire « col dentaire chromatique » dans une zone de l'élément de couche extérieur, située de façon apicale par rapport à la courbe limite, un matériau de l'élément de couche extérieur est coloré au moins partiellement.

7. Procédé selon l'une des revendications 1 à 6, au cours duquel, lors de la sélection de l'élément de couche supplémentaire « col dentaire chromatique » dans une zone située de façon apicale par rapport à la courbe limite, l'élément de couche extérieur (50) est remplacé au moins partiellement par l'élément de couche supplémentaire « col dentaire chromatique » et/ou au cours duquel le contour extérieur de l'élément de couche supplémentaire « col dentaire chromatique » est limité par le contour extérieur de l'élément de couche extérieur (50).

8. Procédé selon l'une des revendications 1 à 7, au cours duquel, lors de la sélection de l'élément de couche supplémentaire « effet optique incisal/occlusal » qui comprend notamment l'élément de couche supplémentaire « effet translucidité » et/ou l'élément de couche supplémentaire « effet Halo », dans une zone limite incisale de l'élément de dent synthétique, l'élément de couche supplémentaire « effet optique incisal/occlusal » est disposé à l'intérieur de l'élément de couche extérieur (50).

9. Procédé selon la revendication 8, au cours duquel l'élément de couche supplémentaire « effet optique incisal/occlusal » est limité par le contour extérieur de l'élément de couche extérieur (50) et/ou au cours duquel, pour la définition de l'élément de couche supplémentaire « effet optique incisal/occlusal », des points de control définis sur la surface de l'élément de couche extérieur (50) sont déplacés apicalement, le déplacement étant effectué de préférence le long d'une normale par rapport à la surface de l'élément de couche extérieur (50).

10. Procédé selon la revendication 8 ou 9, au cours duquel un déplacement de 0 à 1 mm, notamment de 0 à 0,5 mm, est effectué et/ou au cours duquel l'élément de couche supplémentaire « effet optique incisal/occlusal » est formé dans la zone entre la surface avant et après le déplacement et/ou au cours duquel le contour extérieur de l'élément de couche supplémentaire « effet optique incisal/occlusal » est limité par le contour extérieur de l'élément de couche extérieur (50).

11. Procédé selon l'une des revendications 1 à 10, au cours duquel, lors de la sélection de l'élément de couche supplémentaire « bande horizontale », une ligne centrale horizontale est définie et, dans la zone de la ligne centrale, l'élément de couche supplémentaire « bande horizontale « est disposé entre l'élément principal (38) et l'élément de couche extérieur (50), l'élément de couche supplémentaire « bande horizontale » s'étendant jusque dans l'élément principal (38) et/ou l'élément de couche extérieur (50),
l'élément de couche supplémentaire « bande horizontale » ayant de préférence une
étendue incisale/apicale de 0,3 à 2 mm et/ou une profondeur de 0,2 à 1,5 mm.

12. Procédé selon l'une des revendications 1 à 11, au cours duquel, lors de la sélection de l'élément de couche supplémentaire «effet de surface », l'élément de couche supplémentaire « effet de surface » est disposé sur la couche limite dans une zone frontale, l'élément de couche supplémentaire « effet de surface » se recouvrant partiellement avec l'élément de couche supplémentaire « accentuation de mamelons »,
l'élément de couche supplémentaire « effet de surface » ayant de préférence une largeur de 1 à 8 mm, une hauteur de 1 à 10 mm et une profondeur de 0,1 à 1 mm.

13. Procédé selon la revendications 12, **caractérisé en ce que** l'élément de couche supplémentaire « effet de surface » est disposé dans l'élément principal (38) et/ou dans l'élément de couche extérieur (50) et est limité notamment par le contour extérieur de l'élément de couche extérieur (50).

14. Procédé selon l'une des revendications 1 à 13, au cours duquel, pour une définition automatique de points de contrôle sur la surface de l'élément de couche extérieur (50), un réseau virtuel est posé, l'étendue verticale et horizontale du réseau étant définie par l'étendue maximale de la silhouette de contour extérieur, le réseau comprenant de préférence une pluralité de lignes verticales et/ou horizontales qui divisent le contour de dent notamment de façon équidistante.

15. Procédé selon la revendication 14, **caractérisé en ce que** les intersections des lignes horizontales et verticales définissent les points de contrôle (82) et/ou **en ce que**, aux intersections de la ligne verticale et/ou horizontale avec une silhouette de contour extérieur, des points de contrôle (80) sont définis.
